# EUROPÄISCHE PATENTSCHRIFT

(11) **EP 1 845 074 B1**
(45) Veröffentlichungstag und Bekanntmachung des Hinweises auf die Patenterteilung: **03.11.2010**
(21) Anmeldenummer: 06007562.9
(22) Anmeldetag: 11.04.2006
(51) Int. Cl.: C04B 35/83, C04B 35/628, C04B 35/573, B29B 15/12

(54) **Verfahren zum Imprägnieren von Kurzfaserbündeln aus Carbonfasern**
Process for impregnating short carbon fibre bundles
Méthode d'imprégnation de mèches courtes de fibres de carbone

(43) Veröffentlichungstag der Anmeldung: 17.10.2007
(73) Patentinhaber: SGL Carbon SE, 65203 Wiesbaden (DE)
(72) Erfinder: Krätschmer, Ingrid, 86485 Biberach (DE); Kienzle, Andreas, Dr., 86753 Möttingen OT Balgheim (DE)

(56) Entgegenhaltungen:
- EP-A- 1 645 671
- DE-A1- 19 861 035
- GB-A- 1 343 773

## Beschreibung

Die vorliegende Erfindung betrifft ein Verfahren zum Imprägnieren von Carbonfaserbündeln mit einem härtbaren Flüssigharz.

Carbonfaserverstärktes Siliciumcarbid (C/SiC) wird durch Silicierung von Vorkörpern aus einer Kohlenstoffmatrix mit darin eingebetteten Carbonfasern hergestellt. Dabei ist es unumgänglich, den direkten Kontakt zwischen den Carbonfasern und dem infiltrierten Silicium zu verhindern, da sonst die Carbonfasern unter Verlust ihrer Verstärkungswirkung zu Siliciumcarbid umgewandelt werden. Dies lässt sich vermeiden, wenn die Carbonfasern bzw. Faserbündel im Vorkörper mit einer dichten Umhüllung aus "Opferkohlenstoff" umgeben oder die Hohlräume in den Faserbündeln mit Opferkohlenstoff aufgefüllt sind. Der Opferkohlenstoff bindet den nicht mit der Kohlenstoffinatrix reagierten Anteil des Silicium, bevor es zu den Carbonfasern durchdringen kann.

Ein Verfahren zum Imprägnieren von Lang- oder Kurzfaserbündeln aus Carbonfasern mit flüssigem Harz ist in DE-A-19861035 beschrieben. Ferner offenbart sind die so imprägnierten Faserbündel, die durch eine erste Beschichtung aus carbonisierbarem Binder Ensammengchalten werden

Ein Verfahren zur Herstellung eines mit kurzen Carbonfasern (speziell Graphitfasern) verstärkten Verbundwerkstoffs mit einer Matrix aus Siliciumcarbid sowie elementarem Kohlenstoff und Silicium, bei dem die Carbonfasern durch mehrfaches Imprägnieren mit einem carbonisierbaren Imprägniermittel und anschließendes Carbonisieren mit einer mehrschichtigen Kohlenstoffumhüllung versehen worden sind, ist aus der europäischen Patentschrift EP 0 864 548 bekannt. Es umfasst die folgenden Schritte:
a) Zusammenpressen von mindestens zwei Lagen von aus hochfesten Graphitfasern und carbonisierbarem Harz bestehenden Prepregs und Aushärten des durch das Zusammenpressen erhaltenen Körpers,
b) Carbonisieren des nach Verfahrensschritt a) erhaltenen Körpers,
c) mindestens einmal Imprägnieren des nach Verfahrensschritt b) erhaltenen, porösen Körpers mit einem carbonisierbaren Imprägniermittel und danach Carbonisieren des imprägnierten Körpers,
d) Graphitieren des nach Verfahrensschritt c) erhaltenen Körpers,
e) Zerkleinern des nach Verfahrensschritt d) erhaltenen, graphitierten Körpers,
f) Mischen von mindestens einem Teil des nach Verfahrensschritt e) erhaltenen Mahlgutes mit einem kohlenstoffhaltigen Binder aus der Gruppe Kunstharze, Peche, Gemische aus Kunstharzen und Pechen,
g) Formpressen und Härten der nach Verfahrensschritt f) erhaltenen Mischung,
h) Carbonisieren der nach Verfahrensschritt g) erhaltenen Formkörper,
i) Infiltrieren der nach Verfahrensschritt h) erhaltenen porösen Körper mit flüssigem Silicium und Umsetzen der Kohlenstoffmatrix des Körpers zu Siliciumcarbid unter Erhalt der in dem Körper vorhandenen Graphitkurafasern.

Im Schritt a) werden zunächst flächige Gebilde ("Lagen") hergestellt, welche Carbonfasern und ein Harz umfassen. Bei diesen "Lagen" handelt es sich um flächige textile Gebilde wie beispielsweise Gewebe, Aus diesen flächigen Gebilden wird dann ein Körper hergestellt, der mehrfach imprägniert und carbonisiert wird. Dieser Körper ist nur eine Zwischenstufe bei der Herstellung der mit einer Kohlenstoffumhüllung versehenen Carbon-Kurzfasern, welche durch Zerkleinerung (Mahlen) dieses Körpers gewonnen werden. Aus dem Mahlgut und einem carbonisierbaren Matrixbildner (in Schritt f) als Binder bezeichnet) wird dann eine Formmasse hergestellt, aus welcher der zu silicierende Körper gebildet wird.

Das vorstehend beschriebene Verfahren ist relativ aufwändig, da aus den zu imprägnierenden Carbonfasern zuerst ein Körper hergestellt wird, der nach dem Imprägnieren und Carbonisieren wieder zerkleinert werden muss, um mit einer der Silicierung standhaltenden Kohlenstoffhülle beschichtete Kurzfaserbündel zu erhalten. Daher ist ein Verfahren nötig, das es ermöglicht, Kurzfaserbündel aus Carbonfasern ohne den Umweg über die Herstellung eines Körpers direkt mit einer solchen Kohlenstoffhülle zu versehen.

Werden Carbonfaserbündel mit einem Imprägniermittel, beispielsweise einem Harz, imprägniert, so ist es unvermeidlich, dass die imprägnierten Bündel aufgrund des an ihrer Oberfläche anhaftenden Imprägniermittels miteinander verkleben. Dadurch wird anstelle einzelner imprägnierter Bündel ein klumpenartiges harzgetränktes Faserhaufwerk erhalten, das sich nicht ohne weiteres wieder in einzelne Faserbündel zerlegen lässt. Nur nach dem Aushärten oder Carbonisieren könnte das Haufwerk aufgebrochen werden, dabei würden jedoch die Faserbündel geschädigt.

Mit der vorliegenden Erfindung wird ein Verfahren bereitgestellt, das es ermöglicht, Carbonfaserbündel mit einem härtbaren Flüssigharz zu imprägnieren, ohne dass die imprägnierten Faserbündel miteinander verkleben.

Dies wird dadurch erreicht, dass sich die Kurzfaserbündel während der Imprägnierung in einem mechanisch erzeugten Wirbelbett befinden, und solange in diesem Wirbelbett gehalten werden, bis das Harz gehärtet oder zumindest getrocknet ist, so dass die Bündel nicht mehr verkleben können.

Im folgenden wird erläutert, was im Kontext der vorliegenden Erfindung unter einem mechanisch erzeugten Wirbelbett zu verstehen ist. Üblicherweise wird ein Wirbelbett oder eine Wirbelschicht dadurch erzeugt, dass das Schüttgut von unten her von einem Gasstrom durchströmt und dadurch in der Schwebe gehalten wird. Dazu muss die Strömungsgeschwindigkeit des Gases einen bestimmten Grenzwert überschreiten (Wirbelpunkt). Dieser Grenzwert ist abhängig u.a. von der Dichte, Größe, Verteilung und Form der Teilchen des Schüttguts und den Abmessungen der Apparatur. Innerhalb der Wirbelschicht verhält sich das Schüttgut ähnlich wie eine siedende Flüssigkeit, die Teilchen befinden sich in einer permanenten wirbelnden Auf- und Abbewegung. Daher findet in der Wirbelschicht ein besonders intensiver Wärme- und Stoffübergang zwischen den Partikeln statt.

Die Carbonfaserbündel neigen jedoch dazu, sich in einer so erzeugten Wirbelschicht untereinander zu verhaken und dadurch größere Aggregate zu bilden, an denen der Gasstrom vorbeiströmt.

Es wurde aber festgestellt, dass sich mittels mechanischer Mischwerkzeuge wie beispielsweise der Schaufeln eines Mischtrockners ein Wirbelbett erzeugen lässt, in welchem die Faserbundel sich nicht verhaken und imprägniert werden können.

Für das erfindungsgemäße Verfahren sind alle in flüssiger Form vorliegenden Harze geeignet, welche härten können. Insbesondere werden Harze eingesetzt, die carbonisierbar sind, d.h. bei: Erhitzung unter nichtoxidierenden Bedingungen einen im wesentlichen aus Kohlenstoff bestehenden Rückstand bilden, beispielsweise Phenolharze und andere Duroplaste.

Unter Carbonfasern sind alle Arten von Carbonfasern zu verstehen, unabhängig vom Ausgangsmaterial, wobei Polyacrylnitril-, Pech- und Cellulosefasern die gebräuchlichsten Ausgangsmaterialien sind.

In den bevorzugt für das erfindungsgemäße Verfahren eingesetzten Faserbündeln hält ein carbonisierter Binder die Carbonfasern zusammen. Dadurch wird verhindert, dass die Faserbündel während der Imprägnierung im Wirbelbett zerfallen. Wegen der bei der Carbonisierung des Binders erfolgten Volumenverminderung sind die Faserbündel relativ offenporig, und können daher eine größere Menge Harz aufnehmen. Der Harzgehalt der mit dem erfindungsgemäßen Verfahren erhältlichen imprägnierten Faserbündel kann bis zu 35 % der Ausgangsmasse der Faserbündel erreichen.

Geeignete Verfahren zur Herstellung von Faserbündeln definierter Länge, Breite und Dicke, umfassend parallel angeordnete Carbonfasern, welche durch einen carbonisierten Binder zusammengehalten werden, sind in der europäischen Patentanmeldung EP 1 645 671 offenbart.

Eine erste Variante dieses Verfahren umfasst folgende Schritte:
- Tränken mindestens eines Filamentstrangs, der eine Vielzahl paralleler Carbonfaser-Filamente umfasst, mit einem carbonisierbaren Binder, so dass ein Prepreg erhalten wird
- Pressen mindestens eines imprägnierten Filamentstrangs oder mehrerer parallel angeordneter imprägnierter Filamentstränge zu einer Gelegebahn aus parallel orientierten Filamenten (unidirektionales Gelege, im folgenden als UD-Gelege bezeichnet) mit einer definierten Dicke, dabei Härten des Binders durch Wärmebehandlung, so dass eine formstabile Gelegebahn definierter Dicke erhalten wird
- Carbonisieren des Binders in der UD-Gelegebahn
- Schneiden der ggf. in einzelne Bänder aufgetrennten UD-Gelegebahn zu Segmenten (Faserbündeln) definierter Breite und Länge

Eine zweite Variante des Verfahrens umfasst folgende Schritte
- Tränken mindestens eines Filamentstrangs, der eine Vielzahl paralleler Carbonfaser-Filamente umfasst, mit einem carbonisierbaren Binder, so dass ein Prepreg erhalten wird
- Pressen mindestens eines imprägnierten Filamentstrangs oder mehrerer parallel angeordneter imprägnierter Filamentstränge zu einer Gelegebahn aus parallel orientierten Filamenten (unidirektionales Gelege, im folgenden als UD-Gelege bezeichnet) mit einer definierten Dicke, dabei Härten des Binders durch Wärmebehandlung, so dass eine formstabile Gelegebahn definierter Dicke erhalten wird
- Schneiden der ggf. in einzelne Bänder aufgetrennten UD-Gelegebahn zu Segmenten (Faserbündeln) definierter Breite und Länge
- Carbonisieren des Binders in den Faserbündeln

Vorzugsweise werden die Filamentstränge vor der Imprägnierung aufgefächert, um die parallele Anordnung der Fasern nebeneinander in der Ebene zu erleichtern.

Der massebezogene Bindergehalt des Geleges im Prepregzustand beträgt 25 bis 48 % und hängt von den gewählten hnprägnierungsbedingungen ab. Der Prepreg hat eine flächenbezogene Masse zwischen 200 und 500 g/m².

Der Prepreg in Form eines oder mehrerer nebeneinander angeordneter imprägnierter Filamentstränge wird durch einen Walzenstuhl, einen Kalander, eine Bandpresse oder eine andere geeignete kontinuierliche Pressvorrichtung geführt. In dieser Pressvorrichtung wird vorzugsweise durch mehrere hintereinander angeordnete Walzenspalte mit abnehmender lichter Weite die überschüssige Menge an Binder aus den Filamentsträngen heraus gedrückt, und die Stränge werden soweit zusammengepresst, dass jeder Strang nicht mehr als drei übereinander liegende Faserlagen, und bevorzugt nur eine einzige Faserlage mit im wesentlichen parallel verlaufenden Filamenten umfasst. Die Verpressung des Prepregs erfolgt im warmen Zustand (bei Temperaturen bis 200 °C), so dass der carbonisierbare Binder entweder aushärtet oder zumindest soweit härtet, dass formstabile Filamentstränge erhalten werden.

Auch das Abkühlen der jetzt flachen, durch den gehärteten Binder gebundenen Filamentstränge erfolgt bevorzugt in der Pressvorrichtung. Beim Verlassen der kontinuierliche Pressvorrichtung liegt eine flache Gelegebahn aus parallelen Filamenten (unidirektionales Gelege, im folgenden als "UD Gelege" bezeichnet) mit einer Dicke zwischen 0,15 und 0,4 mm vor. Gemäß der ersten Verfahrensvariante wird der carbonisierbare Binder in der Gelegebahn carbonisiert. Die Carbonisierung erfolgt in bekannter Weise durch Erhitzen auf 800 bis 1.000 °C unter nichtoxidierenden Bedingungen, d.h. unter Schutzgasatmosphäre. Bevorzugt erfolgt die Carbonisierung bei einer Temperatur von 900 °C kontinuierlich, d.h. die Gelegebahn durchläuft den Carbonisierungsofen. Die Vorschubgeschwindigkeit der Gelegebahn und die Dimension des Ofens sind dabei so aufeinander abzustimmen, dass die für die Carbonisierung benötigte Verweilzeit erreicht wird.

Die Gelegebahn kann, falls nötig, zur besseren Handhabbarkeit in Bänder mit einer Breite zwischen 20 und 60 mm aufgetrennt werden.

Diese bandförmigen LTD-Gelege werden nun der Länge nach zu Streifen geschnitten, deren Breite der gewünschten Breite der Faserbündel entspricht. Bevorzugt erfolgt dies mittels einer Schneidwalze oder mehrerer nebeneinander angeordneter Schneidwalzen. Es ist auch möglich, die Gelegebahn bzw. die Bänder im noch nicht vollständig gehärteten Zustand durch in den Bandweg gespannte Drähte in Streifen zu schneiden.

Die Streifen werden direkt einer bevorzugt kontinuierlich betriebenen Ablängeinrichtung zugeführt und zu Segmenten. (Faserbündeln) der gewünschten Länge geschnitten. Es ist jedoch auch möglich, das Ablängen in einem vom Schneiden der Streifen getrennten Verfahren mit anderer Geschwindigkeit vorzunehmen. Zu diesem Zweck werden die auf die gewählte Breite geschnittenen Streifen auf Spulen aufgewickelt und zur Ablängeinrichtung transportiert. Das kontinuierliche Ablängen der Streifen auf die gewünschte Länge wird bevorzugt mit einer Messerwalze durchgeführt.

Die so erhaltenen Faserbündel zeichnen sich durch eine definierte, gleichmäßige Länge, Breite und Dicke aus. Die Bündeldicke, d.h. die Anzahl der übereinander liegenden Faserlagen, wurde beim Verpressen des Filamentstrangs zu einer Gelegebahn eingestellt. Die Bündelbreite, d,h, die von der Anzahl der parallel nebeneinander liegender Fasern bestimmte Dimension senkrecht zur Faserrichtung, wird beim Längsschneiden der Gelegebahn bzw. der Bänder zu Streifen eingestellt. Die Bündellänge, d.h. die Dimension in Faserrichtung, wird beim Ablängen der Streifen zu Segmenten (Faserbündeln) eingestellt.

Typischerweise werden Bündel mit folgenden Abmessungen hergestellt: Dicke bei einem Wert zwischen 0,15 und 0,4 mm, Länge bei einem Wert zwischen 6 und 10 mm und Breite bei einem Wert zwischen 0,5 und 3,5 mm. Mindestens 90 % der so hergestellten Faserbündel weisen eine Länge auf, die zwischen 90 und 110 % der mittleren Länge liegt, und eine Breite, die zwischen 90 und 110 % der mittleren Breite liegt.

Gemäß der zweiten Verfahrensvariante wird der carbonisierbare Binder in den Faserbündeln carbonisiert, indem die Bündel unter nichtoxidierenden Bedingungen (Schutzgasatmosphäre) auf 800 bis 1.000 °C, bevorzugt 900°C erhitzt werden.

Die nach der ersten oder zweiten Verfahrensvariante hergestellten Faserbündel aus von einem carbonisierten Binder zusammengehaltenen parallelen Carbonfasern werden für die Imprägnierung einem mechanisch erzeugten Wirbelbett ausgesetzt und in diesem Zustand auf eine zur Härtung oder zumindest Trocknung des Imprägnierharzes ausreichende Temperatur vorgeheizt. Diese Temperatur liegt üblicherweise zwischen 130 und 150 °C, maximal bei 200 °C. Nach der Zugabe des Imprägnicrharzes werden die Faserbündel weiter im Wirbelbett gehalten, bis das Harz gehärtet oder zumindest getrocknet ist, so dass sie nicht mehr verkleben.

Zur Erzeugung des Wirbelbetts kann beispielsweise ein beheizbarer, mit Schaufeln ausgerüsteter Mischtrockner benutzt werden. Bevorzugt erfolgt die Vorwärmung der Bündel auf die Härte- bzw. Trocknungstemperatur des Harzes bei relativ niedriger Drehzahl, um Schädigungen der Faserbündel zu vermeiden. Das Flüssigharz wird in das Wirbelbett eingedüst oder durch einen am Mischer vorgesehenen Dosierstutzen eingebracht. Die Menge des zugegebenen Harzes richtet sich nach dem gewünschten Harzgehalt der zu imprägnierenden Faserbündel. Mit dem erfindungsgemäßen Imprägnierverfahren lässt sich in den Faserbündeln ein Harzgehalt von bis zu 35 % der Ausgangsmasse der Faserbündel erreichen.

Vorzugsweise wird während der Zugabe des Harzes die Drehzahl kurzzeitig erhöht und nach einer kurzen Phase intensiver Durchmischung wieder reduziert. Aufgrund der geringen Schüttdichte (180 bis 280 kg/m³) der von einem carbonisierten Binder zusammengehaltenen Faserbündel lässt sich bereits bei relativ geringen Drehzahlen (und demzufolge geringen Scherkräften) eine intensive dreidimensionale Durchmischung von Faserbündeln und Imprägnierharz erreichen. So kann eine Schädigung der Faserbündel durch zu hohe Scherkräfte im Wirbelbett vermieden werden.

Als besonders geeignet haben sich für die Aufheiz- und die Trocknungsphase Drehzahlen zwischen 30 und 60 1/min erwiesen, die für die Durchmischphase kurzzeitig auf bis zu 100 1/min erhöht werden. Wird der Prozess durch die dimensionslose Fmude-Zahl (Verhältnis zwischen Trägheitskraft und Schwerkraft, proportional dem Quadrat der Drehzahl und dem Durchmesser des Mischers) charakterisiert, so ist die bevorzugte Verfahrensweise wie folgt: Vorheizen, und Trocknen der Faserbündel bei einer Froude-Zahl unterhalb von 1, Zugabe und Einmischen des Imprägnierharzes unter kurzzeitiger Erhöhung der Froude-Zahl auf Werte zwischen 1,5 und 4, bevorzugt auf maximal 2,5.

Typischerweise dauert das Vorheizen der Faserbündel im Wirbelbett 5 bis 10 Minuten (je nach Ausgangs- und Zieltemperatur), das Einmischen des Imprägnierharzes bei erhöhter Drehzahl 1 bis 3 und maximal bis zu 5 Minuten und das Härten bzw. Trocknen der imprägnierten Faserbündel mindestens 5 Minuten.

Um die Aufheizzeit kurz zu halten und die Faserbündel zu schonen, sollte die Aufhetzung mit einer hohen Aufheizgeschwindigkeit erfolgen.

Zur Vermeidung von Anhaftungen können die Innenwand und die Schaufeln des Mischers mit einem Trennmittel behandelt werden.

Das dem Wirbelbett zugeführte Harz wird nahezu quantitativ von den Faserbündeln aufgenommen. Es können imprägnierte Faserbündel mit einem Harzgehalt von bis zu 30 %, bevorzugt bis zu 35 % der Ausgangsmasse der Faserbündel hergestellt werden. Das Imprägnierharz umhüllt die Carbonfasern in den Bündeln und füllt die bei der Pyrolyse des carbonisierbaren Binders entstandenen Hohlräume auf. Dadurch werden die Faserbündel mechanisch stabilisiert. Innerhalb der Bündel werden die Fasern durch das gehärtete Imprägnierharz zusammengehalten, so dass die Bündel bei der weiteren Verarbeitung nicht zerfallen können und die Fasern innerhalb der Bündel in ihrer parallelen räumlichen Anordnung fixiert sind.

Die imprägnierten Faserbündel sind schütt- und rieselfähig und lassen sich leicht mit anderen Komponenten zu relativ homogenen Formmassen mischen. Durch den gehärteten Binder in den Faserbündeln, welcher die parallel nebeneinander liegenden Fasern zusammenhält, wird erreicht, dass sich die Faserbündel beim Mischen der Formmasse nicht auflösen. So ist sichergestellt, dass die Faserbündel in der Formmasse eine weitgehend einheitliche definierte Länge, Breite und Dicke aufweisen.

Typischerweise enthält die Formmasse neben den erfindungsgemäß imprägnierten Faserbündeln einen carbonisierbaren Matrixbildner.

Unter carbonisierbarem Matrixbildner wird ein Kohlenstoff enthaltendes polymeres Material, beispielsweise ein Harz, verstanden, das bei Erhitzung in nichtoxidierender Atmosphäre einen im wesentlichen aus Kohlenstoff bestehenden Pyrolyserückstand bildet. Der carbonisierbare Matrixbildner kann als pulverförmiges Trockenharz oder als Nassharz vorliegen. Besonders geeignet als Matrixbildner sind Phenolharze. Der massebezogene Anteil der Faserbündel an der Formmasse beträgt 70 bis 80 %.

Bei Bedarf können der Formmasse Hilfsstoffe beigemischt werden, wie beispielsweise Siliciumcarbid zur Verbesserung der tribologischen Eigenschaften, und oxidationshemmende Stoffe wie beispielsweise Zirconiumcarbid, Tantalcarbid oder Tantalborid, welche bei Sauerstoffzutritt durch Glasbildung den oxidativen Angriff hemmen. Der massebezogene Anteil der Hilfsstoffe an der Formmasse beträgt insgesamt maximal 10 %.

Aus Formmassen umfassend die erfindungsgemäß imprägnierten Carbonfaserbündel, carbonisierbare Matrixbildner und ggf, Hilfsstoffe lassen sich Grünkörper herstellen, die anschließend carbonisiert bzw. carbonisiert und graphitiert werden, so dass Formkörper mit carbonfaserverstärkter Kohlenstoffmatrix erhalten werden.

Diese Formkörper können direkt verwendet werden, ggf. nach einer Nachimprägnierung mit darauffolgender Carbonisierung und/oder Nachverdichtung mittels Gasphaseninfiltration von Kohlenstoff. Weil die Faserbündel jedoch durch die Imprägnierung im Wirbelbett bereits verdichtet wurden, ist der Nachverdichtungsaufwand für carbonfaserverstärkte Kohlenstoffkörper, welche mit den erfindungsgemäß imprägnierten Faserbündeln hergestellt wurden, geringer als für solche, deren Faserbündel nicht imprägniert worden sind.

Andererseits können die Formkörper mit carbonfaserverstärkter Kohlenstoffmatrix als Vorkörper für die Herstellung von carbonfaserverstärktem Siliciumcarbid (C/SiC) dienen. In diesen Verkörpern sind die Carbonfasern in den erfindungsgemäß imprägnierten Faserbündeln von einer Umhüllung aus den Carbonisierungsrückständen der Harzimprägnierung umgeben und somit gegen den reaktiven Angriff des infiltrierten Siliciums geschützt. So ist sichergestellt, dass auch nach der Silicierung die Verstärkungsfunktion der Carbonfasern erhalten bleibt. Die Silicierung der Vorkörper erfolgt in bekannter Weise durch Infiltration mit Flüssigsilicium.

### Ausführungsbeispiel

Die Herstellung der durch einen carbonisierten Binder zusammengehaltenen Bündel aus Carbonfasern erfolgte nach der zweiten Variante des oben beschriebenen Verfahrens, d.h. aus der auf die gewünschte Dicke gepressten Gelegebahn wurden Bündel mit den gewünschten Abmessungen geschnitten, welche dann bei 900 °C carbonisiert wurden. Die Faserbündel hatten eine Länge von 9 mm, eine Breite von 1 mm und eine Dicke von 0,2 mm.

Die Imprägnierung erfolgte in einem beheizbaren Mischtrockner, der mit ETS^{®}-Schaufeln ausgerüstet war. Die Faserbündel wurden einem Wirbelbett mit einer Froude-Zahl von 0,7 bis 0,8 ausgesetzt und auf eine Temperatur von 130 °C vorgeheizt. Diese war nach 5 bis 10 Minuten erreicht. Dann wurde ein flüssiges Phenolharz in einer Masse von 30 % der Ausgangsmasse der Faserbundel zudosiert, Für die Harzzufuhr wurde die Froude-Zahl auf einen Wert von 2 erhöht und 1 bis 3 Minuten lang auf diesem höheren Wert gehalten. Danach wurde die Froude-Zahl wieder auf 0,7 bis 0,8 zurückgenommen und die Faserbündel noch für weitere 5 bis 7 Minuten im Wirbelbett gehalten. Dabei wurde der Mischer nicht mehr beheizt, so dass die Faserbündel auf Temperaturen zwischen 95 und 115°C abkühlen konnten. In weiteren Versuchen wurde bei ansonsten gleichen Bedingungen die Froude-Zahl für die Durchmischphase auf Werte bis zu 4. erhöht.

Das Flüssigharz wurde stets vollständig durch die Faserbündel aufgenommen. Im nach der Trocknung dem Mischer entnommene Material waren die Faserbündel nicht miteinander verklebt, d.h. es wurden schüttfähige imprägnierte Faserbündel erhalten. Eine Schädigung der Faserbündel durch die im Mischer wirkenden Scherkräfte wurde nicht beobachtet.

## Patentansprüche

1. Verfahren zum Imprägnieren von Kurzfasernbündeln aus Carbonfasern mit einem in flüssiger Form vorliegenden härtbaren Harz, **dadurch gekennzeichnet, dass** die bonfaserbündel sich während der Imprägnierung in einem mechanisch erzeugten Wirbelbett befinden wobei das Wirbelbett mittels eines Mischtrockners erzeugt wird und wobei der Mischtrockner mit Schaufeln ausgerüstet ist, und solange in diesem Wirbelbett gehalten werden, bis das Harz gehärtet oder zumindest getrocknet ist, so dass die Bündel nicht mehr verkleben.

2. Verfahren nach Anspruch 1, umfassend:
• eine Vorheizphase, in der die Carbonfaserbündel auf eine für die Härtung oder Trocknung des Imprägnierharzes ausreichende Temperatur erwärmt werden,
• eine mit der Zugabe des Imprägnierharzes zu den Carbonfaserbündeln beginnende Durchmischphase,
• eine Härtungs- bzw. Trocknungsphase, während der das Imprägnierharz in den Faserbündeln härtet bzw. trocknet
wobei sich die Carbonfaserbündel während des gesamten Verfahrens in einem mechanisch erzeugten Wirbelbett befinden.

3. Verfahren nach Anspruch 2, **dadurch gekennzeichnet, dass** die Carbonfaserbündel auf eine Temperatur von mindestens 130 °C vorgeheizt werden.

4. Verfahren nach Anspruch 2, **dadurch gekennzeichnet, dass**
• die Aufheizphase 5 bis 10 Minuten dauert
• die Durchmischphase 1 bis 5, bevorzugt maximal 3 Minuten dauert
• die Härtungs- bzw. Trocknungsphase mindestens 5 Minuten dauert.

5. Verfahren nach Anspruch 1, **dadurch gekennzeichnet, dass**
• während der Vorheiz- und während der Härtungs- bzw. Trocknungsphase die Drehzahl des Mischtrockners 30 bis 60 l/min beträgt
und
• während der Durchmischphase die Drehzahl des Mischers auf bis zu 100 l/min erhöht ist.

6. Verfahruen nach Anspruch 1, **dadurch gekennzeichnet, dass**
• während der Vorheiz- und während der Härtungs- bzw. Trocknungsphase die Froude-Zahl kleiner als 1 ist
und
• während der Durchmischphase die Froude-Zahl auf 1,5 bis 4, bevorzugt auf maximal 2,5 erhöht ist.

7. Verfahren nach Anspruch 1 oder 2, **dadurch gekennzeichnet, dass** das Harz ein Phenolharz oder ein anderes carbonisierbares Harz ist.

8. Verfahren nach Anspruch 1 oder 2, **dadurch gekennzeichnet, dass** die von den Carbonfaserbündeln aufgenommene Harzmenge bis zu 35 % der Ausgangsmasse der Carbonfaserbündel beträgt.

9. Verfahren nach Anspruch 1 oder 2, **dadurch gekennzeichnet, dass** die Carbonfasern in den zu imprägnierenden Faserbündeln durch einen carbonisierten Binder zusamrnengehalten werden.

10. Verfahren nach Anspruch 9, **dadurch gekennzeichnet, dass** die durch einen carbonisierten Binder zusammengehaltenen Carbonfaserbündel nach dem folgenden Verfahren hergestellt worden sind:
• Tränken mindestens eines Filamentstrangs, der eine Vielzahl paralleler Carbonfaser-Filamente umfasst, mit einem carbonisierbaren Binder, so dass ein Prepreg erhalten wird
• Pressen mindestens eines imprägnierten Filamentstrangs oder mehrerer parallel angeordneter imprägnierter Filamentstränge zu einer Gelegebahn aus parallel orientierten Filamenten (unidirektionales Gelege, im folgenden als UD-Gelege bezeichnet) mit einer definierten Dicke, dabei Härten des Binders durch Wärmebehandlung, so dass eine formstabile Gelegebahn definierter Dicke erhalten wird
• Carbonisieren des Binders in der UD-Gelegebahn
• Schneiden der ggf. in einzelne Bänder aufgetrennten UD-Gelegebahn zu Segmenten (Faserbündeln) definierter Breite und Länge

11. Verfahren nach Anspruch 9, **dadurch gekennzeichnet, dass** die durch einen carbonisierten Binder zusammengehaltenen Carbonfaserbündel nach dem folgenden Verfahren hergestellt worden sind:
• Tränken mindestens eines Filamentstrangs, der eine Vielzahl paralleler Carbonfaser-Filamente umfasst, mit einem carbonisierbaren Binder, so dass ein Prepreg erhalten wird
• Pressen mindestens eines imprägnierten Filamentstrangs oder mehrerer parallel angeordneter imprägnierter Filamentstränge zu einer Gelegebahn aus parallel orientierten Filamenten (unidirektionales Gelege, im folgenden als UD-Gelege bezeichnet) mit einer definierten Dicke, dabei Härten des Binders durch Wärmebehandlung, so dass eine formstabile Gelegebahn definierter Dicke erhalten wird
• Schneiden der ggf. in einzelne Bänder aufgetrennten UD-Gelegebahn zu Segmenten (Faserbündeln) definierter Breite und Länge
• Carbonisieren des Binders in den Faserbündeln

12. Verfahren nach Anspruch 10 oder 11, **dadurch gekennzeichnet, dass** die Dicke der Faserbündel auf einen Wert zwischen 0,15 und 0,4 mm, die Länge der Faserbündel auf einen Wert zwischen 6 bis 15 mm und die Breite der Faserbündel auf einen Wert zwischen 0,5 bis 3,5 mm eingestellt wird.

## Claims

1. A method for impregnating short fiber bundles of carbon fibers having a curable resin in liquid form, **characterized in that**
the carbon fiber bundles are in a mechanically created fluidized bed during the impregnation, the fluidized bed being created by a mixing dryer, and the mixing dryer being equipped with paddles, and the carbon fiber bundles being kept in this fluidized bed until the resin is cured or at least dried, so that the bundles no longer stick together.

2. The device according to claim 1, comprising:
• a preheating phase during which the carbon fiber bundles are heated to a temperature sufficient for curing or drying of the impregnating resin,
• a thorough mixing phase which begins with the addition of the impregnating resin to the carbon fiber bundles,
• a curing and/or drying phase during which the impregnating resin cures and/or dries in the fiber bundles,
wherein the carbon fiber bundles are in a mechanically created fluidized bed during the entire method.

3. The method according to claim 2, **characterized in that**
the carbon fiber bundles are heated to a temperature of at least 130°C.

4. The device according to claim 3, **characterized in that**
• the heating phase lasts for five to ten minutes,
• the thorough mixing phase lasts for one to five minutes, maximally three minutes,
• the curing and/or drying phase lasts at least five minutes.

5. The method according to claim 1, **characterized in that**
• the rotational speed of the mixing dryer is 30 to 60 L/min during the preheating phase and during the curing and/or drying phase, and
• the rotational speed of the mixing dryer is increased to 100 L/min during the thorough mixing phase.

6. The method according to claim 1, **characterized in that**
• the Froude number is less than 1 during the preheating phase and during the curing and/or drying phase, and
• the Froude number is increased to 1.5 to 4, preferably to maximally 2.5 during the thorough mixing phase.

7. The method according to claim 1 or 2, **characterized in that** the resin is a phenolic resin or some other carbonizable resin.

8. The method according to claim 1 or 2, **characterized in that**
the amount of resin absorbed by the carbon fiber bundles is up to 35% of the starting mass of the carbon fiber bundles.

9. The method according to claim 1 or 2, **characterized in that**
the carbon fibers in the fiber bundles to be impregnated are held together by a carbonized binder.

10. The method according to claim 9, **characterized in that** the carbon fiber bundles held together by a carbonized binder have been produced by the following method:
• impregnating at least one filament strand comprising a plurality of parallel carbon fiber filaments, with a carbonizable binder, thus yielding a prepreg,
• pressing at least one impregnated filament strand or multiple impregnated filament strands arranged in parallel to form a fabric sheeting of filaments oriented in parallel (unidirectional layer, hereinafter referred to as a UD layer) having a defined thickness,
• carbonizing the binder in the UD fabric sheeting,
• cutting the UD fabric sheeting, which has been separated into individual strips, into segments (fiber bundles) of a defined length and width.

11. The method according to claim 9, **characterized in that**
the carbon fiber bundles held together by a carbonized binder have been manufactured by the following method:
• impregnating at least one filament strand comprising a plurality of parallel carbon fiber filaments, having a carbonizable binder, to yield a prepreg,
• pressing at least one impregnated filament strand or multiple impregnated filament strands arranged in parallel to form a fabric sheeting of filaments oriented in parallel (unidirectional fabric, hereinafter referred to as UD fabric) having a defined thickness, with curing of the binder by heat treatment to yield a dimensionally stable fabric sheeting of a defined thickness,
• cutting the UD fabric sheeting, optionally separated into individual strips, to form segments (fiber bundles) of a defined length and width,
• carbonizing the binder in the fiber bundles.

12. The method according to claim 10 or 11, **characterized in that**
the thickness of the fiber bundle is set at a level between 0.15 and 0.4 mm, the length of the fiber bundles is set at a level between 6 mm and 15 mm, and the width of the fiber bundles is set at a level between 0.5 mm and 3.5 mm.

## Revendications

1. Procédé d'imprégnation de faisceaux de fibres courtes faits de fibres de carbone comportant une résine durcissable présente sous forme liquide, **caractérisé en ce que**
les faisceaux de fibres de carbone se trouvent pendant l'imprégnation dans un lit à remous généré mécaniquement, le lit à remous étant généré au moyen d'un sécheur mélangeur et le sécheur mélangeur étant équipé de pales et sont maintenus dans ce lit à remous jusqu'à ce que la résine ait durci ou du moins séché pour que les faisceaux ne collent plus.

2. Procédé selon la revendication 1, englobant :
• une phase de préchauffage dans laquelle les faisceaux de fibres de carbone sont chauffés à une température suffisante pour durcir ou sécher la résine d'imprégnation,
• une phase de mélange commençant par l'ajout de la résine d'imprégnation dans les faisceaux de fibres de carbone,
• une phase de durcissement ou de séchage pendant laquelle la résine d'imprégnation est durcie ou séchée dans les faisceaux de fibres,
les faisceaux de fibres de carbone se trouvant pendant l'ensemble du procédé dans un lit à remous généré mécaniquement.

3. Procédé selon la revendication 2, **caractérisé en ce que**
les faisceaux de fibres de carbone sont préchauffés à une température d'au moins 130° C.

4. Procédé selon la revendication 2, **caractérisé en ce que**
• la phase de chauffage dure 5 à 10 minutes,
• la phase de mélange dure 1 à 5, de préférence au maximum 3 minutes,
• la phase de durcissement ou séchage dure au moins 5 minutes.

5. Procédé selon la revendication 1, **caractérisé en ce que,**
• pendant la phase de préchauffage et pendant la phase de durcissement ou séchage, la vitesse de rotation du sécheur mélangeur est comprise entre 30 et 60 l/min et que,
• pendant la phase de mélange, la vitesse de rotation du sécheur augmente jusqu'à 100 l/min.

6. Procédé selon la revendication 1, **caractérisé en ce que,**
• pendant la phase de préchauffage et pendant la phase de durcissement ou séchage, l'indice de Froude est inférieur à 1 et que,
• pendant la phase de mélange, l'indice de Froude augmente jusqu'à 1,5 à 4, de préférence à un maximum de 2,5.

7. Procédé selon la revendication 1 ou 2, **caractérisé en ce que**
la résine est une résine phénolique ou une autre résine carbonisable.

8. Procédé selon la revendication 1 ou 2, **caractérisé en ce que**
la quantité de résine absorbée par les faisceaux de fibres de carbone représente jusqu'à 35 % de la masse initiale des faisceaux de fibres de carbone.

9. Procédé selon la revendication 1 ou 2, **caractérisé en ce que** les fibres de carbone des faisceaux de fibres à imprégner sont agglomérées par un liant carbonisé.

10. Procédé selon la revendication 9, **caractérisé en ce que**
les faisceaux de fibres de carbone agglomérés par un liant carbonisé ont été fabriqués d'après le procédé suivant :
• imprégnation d'au moins un cordon de filaments comprenant une multitude de filaments de carbone avec un liant carbonisable de manière à obtenir une pré-imprégnation,
• compression d'au moins un cordon de filaments imprégnés ou de plusieurs cordon de filaments imprégnés disposés parallèlement en une bande de structure faite de filaments orientés parallèlement (structure unidirectionnelle, appelée ci-après structure UD) d'une épaisseur définie, avec durcissement du liant par traitement thermique de manière à obtenir une bande de structure de forme stable d'une épaisseur définie,
• carbonisation du liant de la bande de structure UD,
• découpe de la bande de structure UD divisée éventuellement en bandes distinctes en segments (faisceaux de fibres) de largeur et longueur définies.

11. Procédé selon la revendication 9, **caractérisé en ce que**
les faisceaux de fibres de carbone agglomérés par un liant carbonisé ont été fabriqués d'après le procédé suivant :
• imprégnation d'au moins un cordon de filaments comprenant une multitude de filaments de carbone avec un liant carbonisable de manière à obtenir une pré-imprégnation,
• compression d'au moins un cordon de filaments imprégnés ou de plusieurs cordon de filaments imprégnés disposés parallèlement en une bande de structure faite de filaments orientés parallèlement (structure unidirectionnelle, appelée ci-après structure UD) d'une épaisseur définie, avec durcissement du liant par traitement thermique de manière à obtenir une bande de structure de forme stable d'épaisseur définie,
• découpe de la structure UD divisée éventuellement en bandes distinctes en segments (faisceaux de fibres) de largeur et longueur définies,
• carbonisation du liant dans les faisceaux de fibres.

12. Procédé selon la revendication 10 ou 11, **caractérisé en ce que**
l'épaisseur des faisceaux de fibres est établie à une valeur comprise entre 0,15 et 0,4 mm, la longueur des faisceaux de fibres à une valeur comprise entre 6 et 15 mm et la largeur des faisceaux de fibres à une valeur comprise entre 0,5 et 3,5 mm.
